# EUROPÄISCHE PATENTSCHRIFT

(11) **EP 0 603 680 B1**
(45) Veröffentlichungstag und Bekanntmachung des Hinweises auf die Patenterteilung: **07.07.1999**
(21) Anmeldenummer: 93119957.4
(22) Anmeldetag: 10.12.1993
(51) Int. Cl.: B32B 27/40, B65D 65/40, C08G 18/66

(54) **Mehrschichtige Polyurethan-Folie und ihre Verwendung zur Herstellung von Verpackungen für lichtempfindliches Material**
Multilayered polyurethane film and its application for the manufacture of packaging for light sensitive material
Film multicouche en polyuréthane et son utilisation pour la fabrication d'emballages pour matériau photosensible

(30) Priorität: 23.12.1992 DE 4243798
(43) Veröffentlichungstag der Anmeldung: 29.06.1994
(73) Patentinhaber: WOLFF WALSRODE AKTIENGESELLSCHAFT, D-29699 Walsrode (DE)
(72) Erfinder: Hargarter, Nicole, Dipl.-Ing., D-21075 Hamburg (DE); Weber, Gunter, Dr., D-29683 Fallingbostel (DE)
(74) Vertreter: Pettrich, Klaus-Günter, Dr.

(56) Entgegenhaltungen:
- EP-A- 0 114 802
- EP-A- 0 276 018
- EP-A- 0 363 092
- EP-A- 0 503 334
- DE-U- 9 003 033
- FR-A- 2 529 559

## Beschreibung

Die vorliegende Erfindung betrifft eine mehrschichtige Polyurethan-Folie und deren Einsatz als Verpackungsmaterial für lichtempfindliches, insbesondere fotografisches Material.

Röntgenfilmverpackungen schützen das fotografische Material insbesondere gegen Lichteinfall, Feuchte und mechanische Beschädigung sowie - im Fall von Röntgenfilmen für den zahnärztlichen Bedarf - gegen den Kontakt mit dem Speichel des Patienten.

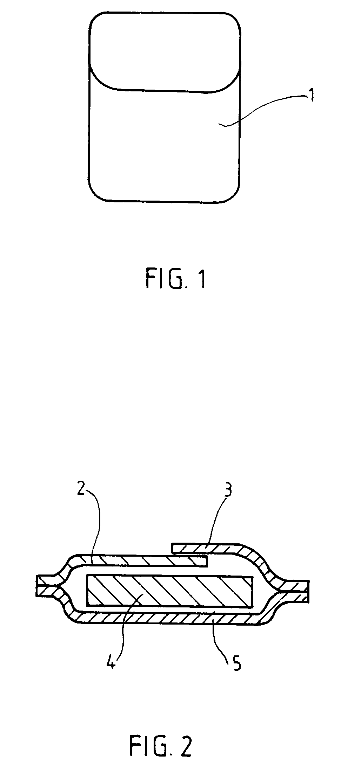

Eine Folie zur Herstellung von Röntgenfilmverpackungen muß die Erfüllung dieser Funktionen gewährleisten und sich auf möglichst wirtschaftliche Weise zu den Verpackungseinheiten verarbeiten lassen. Diese sind in der Regel wie Umschläge bzw. Einstecktaschen 1 (Fig. 1) gestaltet, werden durch das Zusammenführen von drei Folienstreifen 2, 3 und 5 (Fig. 2) und deren Verbinden an den Kanten durch Verschweißen, Verkleben oder Siegeln erzeugt und umschließen das Material 4 als Gesamtpaket, bestehend aus dem eigentlichen Film und u.U. weiteren Einlagen, wie z.B. solche aus Karton oder Bleifolie.

GB-PS 1 098 950 betrifft die Gestaltung einer derartigen Tasche und benennt als Verpackungsmaterial insbesondere Weich-PVC-Folie, die durch geeignete Wahl ihrer Dicke und Einfärbung die nötige Lichtdichtigkeit und durch ihre thermische Verschweißbarkeit auch eine einfache Möglichkeit zur Verbindung der Verpackungskomponenten bietet.

Weich-PVC-Folien zur Herstellung von Dental-Röntgenfilmverpackungen sind im Markt weit verbreitet und besitzen in der Regel zwei Schichten gleicher Dicke, von denen die eine weiß und die andere schwarz oder farbig gestaltet ist. Die weiße Schicht bildet das Äußere der Verpackung und signalisiert überwiegend die Zugehörigkeit des Produkts zum "weißen Sektor", dem medizinischen Bereich. Nachrangig trägt sie mit zur Lichtdichtheit der Folie beil Diese Funktion wird hauptsächlich von der schwarzen bzw. farbigen Schicht erfüllt.

Da diese weich eingestellten PVC-Folien eine vergleichsweise geringe mechanische Festigkeit aufweisen, werden sie in relativ hohen Dicken von 170 bis 200 µm eingesetzt. Nur so kann ein ausreichender Schutz des Filmmaterials gegen mechanische Beschädigung von außen erfolgen. Diese große Dicke ist außerdem zum Schutz der Folie selbst gegen eine Beschädigung durch das scharfkantige Filmmaterial oder weiterer, häufig verwendeter Verpackungskomponenten, wie z.B. Bleifolie und Kartoneinlagen, notwendig.

EP-PS 0 316 520 betrifft eine Dental-Röntgenfilmverpackung und führt an, daß das Einlegen der Verpackung in die Mundhöhle vom Patienten oft als unangenehm empfunden wird, wenn das Röntgenfilmpaket zu steif ist. Harte Verpackungskanten steigern noch das Unbehagen.

EP-PS 0 316 520 empfiehlt daher zur Herstellung der dort beschriebenen Dental-Röntgenfilmverpackung ein weiches oder flexibles Material, wie z.B. Polystyrol (PS), und weist insbesondere darauf hin, daß durch Wahl einer Verpackungsfolie, die deutlich weicher oder flexibler als der Packungsinhalt, d.h. Filmmaterial und Einlagen, ist, das Unbehagen des Patienten bemerkenswert reduziert werden kann.

Aus diesem Grunde ist also eine Verpackungsfolie aus einem Material großer Weichheit anzustreben. Gleichzeitig sollte das Material eine hohe Festigkeit, auch Durchstichfestigkeit, besitzen, um dann bei möglichst geringer Foliendicke eine hohe Flexibilität zu besitzen.

EP-A 0 363 092 betrifft eine Dental-Röntgenfilmverpackung, deren Gestaltung das Risiko eines Kontaktes zwischen dem Speichel des Patienten und dem Filmmaterial minimiert und des weiteren eine Methode, die die Wahrscheinlichkeit einer Übertragung von im Speichel enthaltenen Krankheitskeimen zwischen dem Patienten und dem Laboranten, der die Röntgenbilder aufnimmt, reduziert.

Der erste Schritt dieser Methode beinhaltet das Einsiegeln des Filmmaterials in eine Einstecktasche aus einem Material, das für Röntgenstrahlen transparent, für Speichel und Mikroorganismen aber undurchlässig ist. Dieses sind weitere wichtige Eigenschaften einer Folie zur Verpackung von Röntgenfilmen.

EP-A 0 363 092 betrifft außerdem die Gestaltung einer Röntgenfilmverpackung mit dem oben beschriebenen Zweck, wobei die Verpackung selbst aus einem thermoplastischen, thermisch verschweißbaren Material besteht.

Explizit werden Verpackungen aus Polyethylen (PE), Polypropylen (PP), Polycarbonat (PC), Cellulosepropionat und Celluloseacetat geschützt.

Folien aus diesen Kunststoffen erfüllen zwar die Anforderungen nach Undurchlässigkeit für Speichel und Mikroorganismen, sind jedoch bereits im Vergleich mit marktüblichen Weich-PVC-Folien härter oder steifer und erreichen damit nicht die angestrebte Gebrauchsfreundlichkeit für den Patienten. Außerdem weisen sie z.T. Defizite bezüglich ihres Widerstandes gegen Abrieb und mechanische Beschädigung auf.

Zur Erhöhung der Festigkeit des Verpackungsmaterials und zur Anhebung seiner Durchstichfestigkeit schlagen JP-PS 199 393, JP-PS 098 805, JP-PS 267 775 und EP-A 0 276 018 mehrschichtige Folienaufbauten vor,

So betrifft JP-PS 199 393 ein mindestens vierschichtiges Laminat aus einer porösen Schicht, z.B. einem Netz aus thermoplastischem Kunststoff, einer flexiblen Lage, einer Schicht aus geschäumtem Kunststoff und einer thermoplastischen Siegelschicht.

Neben dem relativ hohen Herstellungsaufwand ist bei diesem Aufbau seine schlechte stoffliche Wiederverwertbarkeit zu bemängeln. Denn im Zuge der Bestrebungen gebrauchte Verpackungsmaterialien zurückzunehmen und neuen Verwendungen zuzuführen, ist neben den technologischen Eigenschaften eines Materials auch seine stoffliche Wiederverwertbarkeit durch werkstoffliches Recycling von hoher Bedeutung.

JP-PS 098 805 betrifft ein Verpackungsmaterial für Filme, für dessen Herstellung ein Netz aus einem thermoplastischen Kunststoff beidseitig mit einer flexiblen thermoplastischen Schicht verklebt wird. Als Rohstoffe für das Netz werden HDPE, LLDPE oder PET, für die flexiblen Schichten PE, PP oder PA genannt. Dieser Aufbau besitzt eine relativ hohe Steifigkeit und ist auch nur in dem Sonderfall, daß sowohl Netz als auch flexible Schichten aus PE eingesetzt werden, als sortenreines Material problemlos wiederzuverwerten,

In JP-PS 276 775 werden die Gestaltung einer Verpackung für lichtempfindliches, fotografisches Material und das Verpackungsmaterial selbst beschrieben. Dies besteht aus einer mehrschichtigen coextrudierten Folie, deren eine Randschicht aus einem Ethylen-Copolymer und die andere aus einem Polyolefin besteht. Als Polyolefine können PE, PE/PP-Copolyere, PE/PB-Copolymere, PP/PB-Copolymere, PB, PS, PMMA oder PP verwendet werden. Es kann u.U. auch eine Mittelschicht zwischen die beiden Randschichten coextrudiert werden.

EP-A 0 276 018 betrifft ebenfalls ein mehrschichtiges Verpackungsmaterial für lichtempfindliche Materialien, wobei erneut eine der Schichten aus einem Ethylen-Copolymer besteht. Die zweite Schicht setzt sich aus einem Thermoplasten zusammen, besitzt einen E-Modul von größer 40 kg/mm² und ist weniger hygroskopisch als die Ethylen-Copolymer-Schicht. Auf die zweite Schicht wird eine flexible Schicht laminiert, die aus einem Kunststoff, auch in metallisierter Ausführung, Papier, einer Metallfolie oder z.B. auch einem Vlies bestehen kann.

Die beiden zuletzt erwähnten Dokumente beschreiben also Verpackungsmaterialien, die durch den Einsatz von unterschiedlichen Materialien wie Kunststoffe, Papier und Metall und daraus hergestellten Verbunden dem Anspruch nach stofflicher Wiederverwertbarkeit durch werkstoffliches Recycling nicht genügen. In der Regel genügen sie auch nicht den Anforderungen bezüglich Weichheit und Flexibilität.

Ein zusätzlicher kritischer Punkt bei diesen Verpackungsaufbauten ist die fehlende Geruchsneutralität von Ethylen-Copolymeren, die mit Vinylacetat, Acrylaten, wie z.B. Ethylacrylat oder Methylacrylat oder Acrylsäure modifiziert sind, Der typische, säuerliche Geruch dieser Kunststoffe wird von den meisten Menschen als unangenehm empfunden.

Eine zweischichtige coextrudierte Folie aus einer LDPE- und einer HDPE-Lage, wie sie in JP-PS 229 500 als Verpackungsmaterial für lichtempfindliches Matrial beschrieben wird, ist für eine stoffliche Wiederverwertung gut geeignet, hinsichtlich ihrer Weichheit und Flexibilität jedoch unzulänglich.

Eine hohe Steifigkeit weist auch die Verpackungsfolie für Filme nach JP-PS 021 614, eine biaxial gereckte PP-Folie mit PVDC-Beschichtung, auf.

DE-PS 632 041 und GB-PS 056 848 betreffen jeweils Sammelverpackungen für einen Stapel von Filmmaterial, die das Einführen des Stapels in eine Vorratscassette, die Teil des Röntgenapparates ist, erleichtern. Für diese Anwendung ist die Weichheit und Flexibilität der Verpackungsfolie von untergeordneter Bedeutung. Dementsprechend sind die dort beschriebenen dreischichtigen Verpackungsmaterial-Aufbauten - PE-Siegelschicht/opake Kernschicht/Schicht hoher Festigkeit, vorzugsweise Polyester bzw. Papier/Aluminium-Folie/PE - ebenfalls von einer Steifigkeit, die für eine Dental-Röntgenfilmverpackung zu hoch ausfällt.

Die Aufgabe der vorliegenden Erfindung bestand folglich darin, eine möglichst weiche und flexible Verpackungsfolie für lichtempfindliches Material, insbesondere Röntgenfilme für den zahnärztlichen Bedarf, zur Verfügung zu stellen, die sich jedoch gleichzeitig durch eine gute mechanische Festigkeit, geringen Abrieb und einen hohen Widerstand gegen mechanische Beschädigungen auszeichnete. Die Folie sollte zusätzlich lichtdicht, aber transparent für Röntgenstrahlen, undurchlässig für Speichel und Mikroorganismen sowie geruchs- und geschmacksneutral sein. Eine wirtschaftliche Verarbeitbarkeit auf Verpackungsmaschinen zu den Verpackungseinheiten, thermische oder Hochfrequenz-Verschweißbarkeit einfache stoffliche Wiederverwertung und eine Reduzierung der erforderlichen Foliendicke durch verbesserte mechanische Eigenschaften und damit auch eine Reduzierung des Verpackungsanteils am Produkt waren weitere Anforderungen an das Verpackungsmaterial.

Diese Aufgabe konnte überraschenderweise durch die Herstellung einer mehrschichtigen Folie auf Basis von thermoplastischem Polyurethan (TPU) gelöst werden.

Gegenstand der Erfindung ist somit eine mindestens zweischichtige Folie aus thermoplastischem Polyurethan (TPU), erhältlich durch Einwirkung von Druck und Wärme oder Verkleben oder gleichzeitige Coextrusion von mehreren TPU-Schichten, wobei die für die jeweilige Schicht eingesetzten TPU eine Härte von kleiner 95 Shore A besitzen,
die Härte-Differenz zwischen allen verwendeten TPU innerhalb einer Schicht und den Schichten untereinander kleiner als 15 Shore A ist,
mindestens eine der Schichten wenigstens ein lichtabschirmendes Material enthält, und
die Summe der Gewichtsanteile aller lichtabschirmenden Materialien in der Folie bezogen auf das Foliengewicht mindestens 3 % beträgt.

Der wesentliche Erfindungsgedanke besteht darin, eine TPU-Folie, die in idealer Weise hohe Weichheit, Lichtdichtigkeit, Verschweißbarkeit, Festigkeit und Durchstichfestigkeit miteinander verbindet, für die beschriebene Verwendung und unter dem Gesichtspunkt einer einfachen und möglichst vielseitigen Wiederverwertbarkeit maßzuschneidern.

Geeignete Aufbaukomponenten für die TPU werden in EP-PS 0 129 193 detailliert beschrieben, sind aber auch der einschlägigen Polyurethan-Literatur zu entnehmen (z.B. Polyurethane Elastomers von C. Hepburn, Applied Science Publisher Ltd., Barking Essex, England, 1982). Vorzugsweise werden aromatische TPU eingesetzt, wobei sich die für die einzelnen Schichten verwendeten TPU hinsichtlich ihres chemischen Aufbaus unterscheiden können. Auch die Herstellung mindestens einer Schicht aus einem Blend von TPU-Typen ist denkbar. Durch den Einsatz von TPU mit einer Härte unter 95 Shore A ist eine hohe Folienweichheit gewährleistet.

Mindestens eine Schicht der erfindungsgemäßen TPU-Folie enthält wenigstens ein lichtabschirmendes Material. Damit sind alle Stoffe umfaßt, die den Durchgang von Licht des Wellenlängenbereichs, der der zu einer unerwünschten Belichtung des lichtempfindlichen Materials führt, durch die Schicht verhindern und sich in der Kunststoffschmelze dispergieren lassen. Beispiele dafür sind Farbpigmente wie Ruß, Eisenoxid oder Titandioxid, Füllstoffe wie Talk, Calciumcarbonat oder Metallpartikel und Farbstoffe wie Phthalocyanin oder Kobalt-Blau.

Eine bevorzugte Ausführung sieht die Verwendung von Ruß mit einer mittleren Partikelgröße von unter 20 nm vor. Auf diese Weise wird eine gleichmäßig gute Dispersion der Partikel in der Kunststoffmatrix und damit auch eine reproduzierbar hohe Lichtdichtheit der Schicht erzielte

Der Gehalt an lichtabschirmendem Material innerhalb einer Schicht liegt zwischen 0,5 und 15 Gew.-%, vorzugsweise zwischen 2 und 10 %. Dieses kann in pulvriger, flüssiger oder pastöser Form direkt oder in Form eines Masterbatches bereits eingearbeitet in eine Kunststoffmatrix dem TPU beigemengt werden.

Zur weiteren Erhöhung der Lichtdichtigkeit der Folie ist es zweckmäßig, mindestens eine weitere TPU-Schicht mit lichtabschirmendem Material auszurüsten, wobei seine Einarbeitung auch in der oben beschriebenen Art erfolgt.

Dieses sollte die Schicht außerdem vorzugsweise in einer von der ersten Schicht sich deutlich abhebenden Farbe bzw. Graustufe einfärben, um bei der Gestaltung der Verpackungseinheit eine einfache Möglichkeit zur Kennzeichnung von Vorder- und Rückseite sowie eine größere Freiheit bei der farblichen Gestaltung der Verpackung zu bieten.

Vorzugsweise wird dafür ein Weiß-Pigment, wie z.B. Titandioxid in einem Gewichtsanteil von ebenfalls 0,5 bis 15 % bezogen auf die Schicht, vorzugsweise 2 bis 10 %, eingesetzt.

Erfindungsgemäß beträgt die Summe der Gewichtsanteile aller lichtabschirmenden Materialien in der Folie bezogen auf das Foliengewicht mindestens 3 %, liegt also über dem Anteil, mit dem diese Stoffe - falls überhaupt - üblicherweise in thermoplastische Polyurethan-Folien eingearbeitet werden.

Je nach Foliendicke läßt sich nämlich z.B. bereits durch Zugabe von 0,5 bis 2 % Ruß eine deckende Schwarzeinfärbung der Folie erzielen.

Durch den erhöhten Anteil an lichtabschirmendem Material erfüllt die Folie die Anforderungen bezüglich Lichtdichtheit an ein Verpackungsmaterial für Filme in besonderem Maße.

Neben dem lichtabschirmenden Material können dem TPU der jeweiligen Schicht auch Zusatzstoffe in üblichen Mengen einverleibt werden. Dies kann bei der TPU-Produktion und bei der Folienherstellung erfolgen. Als übliche Zusatzstoffe seien beispielsweise Gleitmittel, Antiblockmittel, Inhibitoren, Stabilisatoren gegen Hydrolyse, Licht oder Hitze und anorganische und/oder organische Füllstoffe genannt.

Nähere Angaben über die obengenannten Zusatzstoffe sind der Fachliteratur, beispielsweise "High Polymers", Band XVI, Polyurethane, Teil 1 und 2, von J.H. Saunders und K.C. Frisch, Interscience Publisher, New York, 1962 bzw. 1964 oder dem "Kunststoff-Taschenbuch" von Hansjürgen Saechtling, Hanser, München, Wien, 1989, S. 53 bis 61, zu entnehmen.

Die TPU-Schichten können, gegebenenfalls durch Zugabe von lichtabschirmendem Material und weiteren Zusatzstoffen, durch Schmelzextrusion hergestellt werden. Geeignete Verfahren sind die Flachfilm-, vorzugsweise aber auch die Blasfilmextrusion.

Die Verarbeitung von TPU durch Extrusion wird in der Fachliteratur, beispielsweise "Kunststoff-Handbuch", Band VII, Polyurethane von Becker und Braun, Hanser, München, Wien, 1983, S. 433/434, erläutert.

Die einzelnen Schichten können nach ihrer Extrusion durch Einwirkung von Druck und Wärme oder Verkleben zu einer Mehrschichtfolie miteinander verbunden werden. Bevorzugt wird jedoch die gleichzeitige Coextrusion von mindestens zwei Schichten unter Einsatz sogenannter Mehrschicht-Extrusionswerkzeuge.

Die erfindungsgemäße Folie kann ein- oder beidseitig in üblicher Weise vorbehandelt werden, insbesondere mit einer Corona-, Fluor- oder Plasmavorbehandlung. Wird eine Folie durch nachträgliches Verbinden von Einzelfolien hergestellt, ist dieser Schritt auch für die Einzelfolie möglich. Er ist dann besonders vorteilhaft, wenn die Einzelfolien verklebt werden sollen, da eine Vorbehandlung der Folienoberfläche ihre Benetzbarkeit für Klebstoffe bekanntermaßen steigert.

Die Gesamtdicke der erfindungsgemäßen Folie liegt zwischen 30 und 300 µm, vorzugsweise aber zwischen 80 und 200 µm. Die Dicke der Einzelschichten beträgt 15 bis 285 µm, vorzugsweise 30 bis 170 µm.

Eine bevorzugte Ausführung der erfindungsgemäßen Folie sieht eine Schicht aus einem TPU mit einer Härte zwischen 90 und 95 Shore A und eine andere aus einem TPU mit einer Härte zwischen 70 und 90 Shore A vor, wobei das lichtabschirmende Material vorzugsweise in das härtere TPU eingearbeitet wird und das weichere TPU die Außenschicht der Verpackung bildete Das härtere TPU steuert so eine erhöhte Reiß- und Durchstichfestigkeit, das weichere die verbesserte Gebrauchsfreundlichkeit bei.

Da zu ihrer Herstellung thermoplastisch verarbeitbare Polyurethane eingesetzt werden, ist eine stoffliche Wiederverwertung der Verpackungsfolie auf einfache Weise möglich: Die Folie wird zerschnitzelt, u.U. regranuliert und das Regranulat dann erneut extrudiert.

Unter dem Gesichtpunkt eines werkstofflichen Recyclings sollten die TPU-Typen der einzelnen Schichten chemisch möglichst ähnlich, d.h. aus denselben Komponenten (Isocyanat, lang- und kurzkettiges Polyol) zusammengesetzt sein und sich bezüglich ihrer Härte um weniger als 15 Shore A voneinander unterscheiden. Bei höheren Härte-Abweichungen kommt es verstärkt zu Unverträglichkeiten zwischen den TPU, die sich z.B. durch Bildung von härteren Einschlüssen in einer weicheren Matrix ausdrücken können.

Die in der Regel eingestellte Mehrfarbigkeit der Folie und die häufig bei mehrfacher Extrusion von TPU beobachtete Erhöhung der Anzahl an Gelkörpern wird üblicherweise bei einer Rückführung in die Anwendung "Filmverpackung" die Einkapselung in Schichten aus Neu-Material erfordern,

Die erfindungsgemäße mehrschichtige TPU-Folie eignet sich für die Herstellung von Verpackungseinheiten für lichtempfindliches Material, insbesondere Dental-Röntgenfilme. Die Gestaltung der Verpackung kann in der üblichen Weise als Einstecktasche unterschiedlichster Ausführung erfolgen. Beispiele dafür nennen GB-PS 020 183, DE-PS 632 041 oder EP-PS 0 316 520.

Die Verbindung der einzelnen Folienteile zu einer Verpackungseinheit kann durch die für Kunststoffolien bekannten Methoden erfolgen, vorzugsweise aber durch Verschweißen unter Einwirkung von Druck und Wärme oder eines Hochfrequenz-Feldes.

Neben dem lichtempfindlichen Material können in die Verpackung auch weitere Einlagen aus z.B. Karton oder Bleifolie eingelegt werden.

Der Gegenstand der Erfindung soll anhand der folgenden Beispiele näher erläutert werden.

### Beispiele 1 bis 4, Vergleichsbeispiele 1 und 2

### Beispiel 1

Durch Coextrusion wurde eine zweischichtige TPU-Blasfolie hergestellt. Basisrohstoff für beide Schichten war dieselbe aromatische PU-Ester-Type mit einer Härte von 93 Shore A und einem MFI (melt flow index) von 18 g/10 min, gemessen bei 190°C und einem Auflagegewicht von 8,7 kg. Als Zusatzstoffe wurden beiden Schichten über ein Antiblockbatch auf Polyurethanbasis 1,5 % Kieselsäure und 0,5 % Wachs beigemischt. Eine Schicht wurde mit 5 % Ruß einer mittleren Partikelgröße von 10 nm, die andere mit 6 % Titandioxid als Farbpigment ausgerüstet. Dies geschah jeweils über ein Masterbatch auf Polyurethanbasis.

Die Dicke der Schichten betrug jeweils 90 µm.

Reißfestigkeit, -dehnung, Shore A-Härte und Lichtdichtheit der Folie siehe Tabelle 1.

### Beispiel 2

Durch Coextrusion wurde eine zweischichtige TPU-Blasfolie hergestellt. Basisrohstoff für beide Schichten war dieselbe aromatische PU-Ester-Type mit einer Härte von 86 Shore A und einem MFI von 22 g/10 min, gemessen bei 200°C und einem Auflagegewicht von 10 kg.

Die Zugabe von Zusatzstoffen, Ruß und Titandioxid erfolgte nach Art, Menge und Einarbeitungsweise wie in Beispiel 1.

Die Dicke der Schichten betrug jeweils 70 µm.

Reißfestigkeit, -dehnung, Shore A-Härte und Lichtdichtheit der Folie siehe Tabelle 1.

### Beispiel 3

Analog Beispiel 2 wurde eine zweischichtige TPU-Blasfolie hergestellt, deren beide Schichten jedoch nur 50 µm stark waren.

Der Anteil an Kieselsäure und Wachs in den beiden Schichten wurde auf 2,0 % bzw. 0,6 % erhöht,

Bei unverändertem Titandioxid-Gehalt von 6 % in der weißen Schicht betrug die Rußkonzentration in der schwarzen Schicht nun 5,5 %.

Reißfestigkeit, -dehnung, Shore A-Härte und Lichtdichtheit der Folie siehe Tabelle 1.

### Beispiel 4

Durch Coextrusion wurde eine zweischichtige TPU-Blasfolie hergestellt. Basisrohstoff für die erste Schicht war das in Beispiel 1 beschriebene härtere TPU, für die zweite Schicht das in Beispiel 2 beschriebene weichere TPU.

Beiden Schichten wurden analog Beispiel 3 2,0 % Kieselsäure und 0,6 % Wachs zugemischt.

Die härtere TPU-Schicht wurde mit 5,5 % Ruß, die weichere mit 6 % Titandioxid ausgerüstet.

Die Dicke beider Schichten betrug jeweils 50 µm.

Reißfestigkeit, -dehnung, Shore A-Härte und Lichtdichtheit der Folie siehe Tabelle 1.

### Vergleichsbeispiel 1

Es wurde die Verpackungsfolie einer handelsüblichen Dental-Röntgenfilmverpackung untersucht.

Es handelte sich dabei um eine zweischichtige Weich-PVC-Folie von 190 µm Gesamtdicke. Eine Schicht war schwarz, die andere weiß eingefärbt. Der Dickenaufbau war symmetrisch.

Reißfestigkeit, -dehnung, Shore A-Härte und Lichtdichtheit der Folie siehe Tabelle 1.

### Vergleichsbeispiel 2

Es wurde die Verpackungsfolie einer handelsüblichen Dental-Röntgenfilmverpackung untersucht.

Es handelte sich dabei erneut um eine zweischichtige, schwarz/weiße Weich-PVC-Folie, die sich aber relativ zu der Folie aus Vergleichsbeispiel 1 deutlich weicher anfühlte.

Die Gesamtdicke der Folie betrug 175 µm, die Schichtdickenverteilung war symmetrisch.

Reißfestigkeit, -dehnung, Shore A-Härte und Lichtdichtheit der Folie siehe Tabelle 1.

### Vergleichsbeispiel 3

Analog Beispiel 2 wurde eine zweischichtige TPU-Blasfolie hergestellt, wobei die eine Schicht jedoch statt 5 % nur 2,5 % Ruß enthielt.

Reißfestigkeit, -dehnung, Shore A-Härte und Lichtdichtheit der Folie siehe Tabelle 1.

### Bewertung der Ergebnisse gemäß Tabelle 1

Es wird deutlich, daß durch geeignete Wahl der Rezeptur durchaus Weich-PVC-Folien hoher Weichheit hergestellt werden können (s. Shore-A-Härte von Vergleichsbeispiel 2).

Die erfindungsgemäßen Folien auf Basis TPU zeichnen sich jedoch bei gleicher Shore Härte durch hohe Festigkeit und Dehnfähigkeit bei gleichzeitig deutlich reduzierter Foliendicke aus.

Sie vermindern damit die Menge an Verpackungsmaterial, bieten jedoch dabei einen mindestens ebenbürtigen Schutz des fotografischen Material vor Beschädigungen.

Aus diesem Grund, kombiniert mit ihrer Weichheit und Lichtdichtigkeit, eignen sie sich auf hervorragende Weise insbesondere für die Verpackung von Dental-Röntgenfilmen.

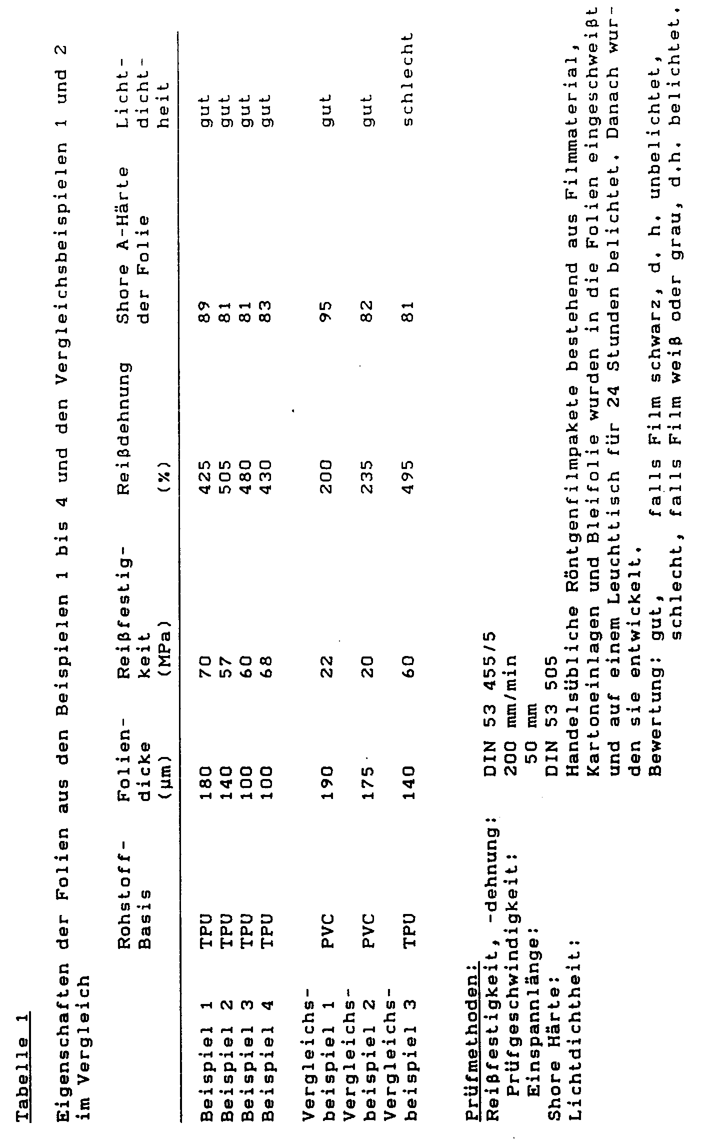

## Patentansprüche

1. Mindestens zweischichtige Folie aus thermoplastischem Polyurethan (TPU), erhältlich durch Einwirkung von Druck und Wärme oder Verkleben oder gleichzeitige Coextrusion von mehreren TPU-Schichten, wobei die für die jeweilige Schicht eingesetzten TPU eine Härte von kleiner 95 Shore A besitzen,
die Härte-Differenz zwischen allen verwendeten TPU innerhalb einer Schicht und den Schichten untereinander kleiner als 15 Shore A ist,
mindestens eine der Schichten wenigstens ein lichtabschirmendes Material enthält, und
die Summe der Gewichtsanteile aller lichtabschirmenden Materialien in der Folie bezogen auf das Foliengewicht mindestens 3 % beträgt.

2. Mindestens zweischichtige TPU-Folie nach Anspruch 1, dadurch gekennzeichnet, daß die für mindestens eine Schicht eingesetzten TPU eine Härte zwischen 90 und 95 Shore A besitzen und die für mindestens eine weitere Schicht verwendeten TPU eine Härte zwischen 75 und 90 Shore A aufweisen.

3. Mindestens zweischichtige TPU-Folie nach Anspruch 1 oder dadurch gekennzeichnet, daß als lichtabschirmendes Material Farbpigmente, Farbstoffe und/oder Füllstoffe eingesetzt werden.

4. Mindestens zweischichtige TPU-Folie nach Anspruch 1, 2 oder 3, dadurch gekennzeichnet, daß als ein lichtabschirmendes Material Ruß eingesetzt wird.

5. Mindestens zweischichtige TPU-Folie nach wenigstens einem der vorhergehenden Ansprüche, dadurch gekennzeichnet, daß der Gehalt an lichtabschirmendem Material in einer Schicht bezogen auf deren Gewicht zwischen 0,5 und 15 Gew.-% liegt.

6. Mindestens zweischichtige TPU-Folie nach wenigstens einem der vorhergehenden Ansprüche, dadurch gekennzeichnet, daß wenigstens eine weitere Schicht ein lichtabschirmendes Material enthält, dessen Farbe bzw. Grauton sich deutlich von dem des lichtabschirmenden Materials der ersten Schicht unterscheidet.

7. Mindestens zweischichtige TPU-Folie nach wenigstens einem der vorhergehenden Ansprüche, dadurch gekennzeichnet, daß eine Randschicht der TPU-Folie Ruß als lichtabschirmendes Material und die andere Randschicht ein Weiß-Pigment enthält.

8. Mindestens zweischichtige TPU-Folie nach wenigstens einem der vorhergehenden Ansprüche, dadurch gekennzeichnet, daß alle für ihre Herstellung eingesetzten TPU dieselbe chemische Zusammensetzung hinsichtlich ihrer drei Komponenten Isocyanat, langkettiges und kurzkettiges Polyol aufweisen.

9. Mindestens zweischichtige TPU-Folie nach wenigstens einem der vorhergehenden Ansprüche, dadurch gekennzeichnet, daß die Folie oder mindestens eine ihrer Schichten einer Corona-, Fluor- oder Plasmavorbehandlung unterzogen ist.

10. Mindestens zweischichtige TPU-Folie nach wenigstens einem der vorhergehenden Ansprüche, dadurch gekennzeichnet, daß die Dicke der Folie zwischen 30 µm und 300 µm liegt.

11. Mindestens zweischichtige TPU-Folie nach wenigstens einem der vorhergehenden Ansprüche, dadurch gekennzeichnet, daß die Dicke der Schichten jeweils zwischen 15 µm und 285 µm beträgt.

12. Verwendung einer mindestens zweischichtigen TPU-Folie nach wenigestens einem der vorhergehenden Ansprüche als Verpackungsmaterial für lichtempfindliches Material.

13. Verwendung gemäß Anspruch 12 für Röntgenfilme.

## Claims

1. Thermoplastic polyurethane (TPU) film having at least two layers, obtainable by the action of pressure and heat or cementing or simultaneous coextrusion of a plurality of TPU layers, wherein the TPUs utilised for the respective layer have a hardness of less than 95 Shore A,
the difference in hardness between all the TPUs used within a layer and between the layers is less than 15 Shore A,
at least one of the layers contains at least one light-screening material, and
the sum of the proportions by weight of all the light-screening materials in the film is at least 3% relative to the weight of the film.

2. TPU film having at least two layers according to Claim 1, characterised in that the TPUs utilised for at least one layer have a hardness between 90 and 95 Shore A and the TPUs used for at least one further layer exhibit a hardness between 75 and 90 Shore A.

3. TPU film having at least two layers according to Claim 1 or 2, characterised in that coloured pigments, dyes and/or fillers are utilised as the light-screening material.

4. TPU film having at least two layers according to Claim 1, 2 or 3, characterised in that carbon black is utilised as a light-screening material.

5. TPU film having at least two layers according to at least one of the preceding claims, characterised in that the light-screening material content of a layer is between 0.5 and 15 wt.% relative to the weight thereof.

6. TPU film having at least two layers according to at least one of the preceding claims, characterised in that at least one further layer contains a light-screening material whereof the colour or grey shade is clearly distinct from that of the light-screening material of the first layer.

7. TPU film having at least two layers according to at least one of the preceding claims, characterised in that one covering layer of the TPU film contains carbon black as the light-screening material and the other covering layer contains a white pigment.

8. TPU film having at least two layers according to at least one of the preceding claims, characterised in that all the TPUs utilised for the manufacture thereof exhibit the same chemical composition in respect of the three components thereof, isocyanate, long-chain polyol and short-chain polyol.

9. TPU film having at least two layers according to at least one of the preceding claims, characterised in that the film or at least one of the layers thereof is subjected to a corona, fluorine or plasma pretreatment.

10. TPU film having at least two layers according to at least one of the preceding claims, characterised in that the thickness of the film is between 30 µm and 300 µm.

11. TPU film having at least two layers according to at least one of the preceding claims, characterised in that the thickness of the respective layers is between 15 µm and 285 µm.

12. Use of a TPU film having at least two layers according to at least one of the preceding claims as a pack material for photosensitive material.

13. Use according to Claim 12 for X-ray films.

## Revendications

1. Feuille comprenant au moins deux couches constituées de polyuréthanne thermoplastique (TPU), que l'on obtient sous l'effet de la pression et de la chaleur ou par collage ou encore par coextrusion simultanée de plusieurs couches de TPU, dans laquelle les TPU mis en oeuvre pour la couche respective possèdent une dureté Shore A inférieure à 95,
la différence de dureté Shore A entre tous les TPU utilisés à l'intérieur d'une couche et dans les couches entre elles est inférieure à 15,
au moins une des couches contient au moins une matière de protection contre l'effet de la lumière, et
la somme des parties en poids de toutes les matières de protection contre l'effet de la lumière dans la feuille rapportée au poids de la feuille s'élève à au moins 3%.

2. Feuille en TPU comprenant au moins deux couches selon la revendication 1, caractérisée en ce que les TPU mis en oeuvre pour au moins une couche possèdent une dureté Shore A entre 90 et 95 et les TPU utilisés pour au moins une couche supplémentaire présentent une dureté Shore A entre 75 et 90.

3. Feuille en TPU comprenant au moins deux couches selon la revendication 1 ou 2, caractérisée en ce qu'on met en oeuvre, à titre de matière de protection contre l'effet de la lumière, des pigments colorés, des colorants et/ou des matières de charge.

4. Feuille en TPU comprenant au moins deux couches selon la revendication 1, 2 ou 3, caractérisée en ce qu'on met en oeuvre du noir de carbone à titre de matière de protection contre l'effet de la lumière.

5. Feuille en TPU comprenant au moins deux couches selon au moins une des revendications précédentes, caractérisée en ce que la matière de protection contre l'effet de la lumière dans une couche possède une teneur, rapportée au poids de la couche, entre 0,5 et 15% en poids.

6. Feuille en TPU comprenant au moins deux couches selon au moins une des revendications précédentes, caractérisée en ce qu'au moins une couche supplémentaire contient une matière de protection contre l'effet de la lumière dont la couleur, respectivement le ton de gris se distingue nettement de celle ou de celui de la matière de protection contre l'effet de la lumière de la première couche.

7. Feuille en TPU comprenant au moins deux couches selon au moins une des revendications précédentes, caractérisée en ce qu'une couche marginale de la feuille en TPU contient du noir de carbone à titre de matière de protection contre l'effet de la lumière, l'autre couche marginale contenant un pigment blanc.

8. Feuille en TPU comprenant au moins deux couches selon au moins une des revendications précédentes, caractérisée en ce que tous les TPU mis en oeuvre pour sa fabrication présentent la même composition chimique en ce qui concerne leurs trois composants d'isocyanate, de polyol à longue chaîne et à courte chaîne.

9. Feuille en TPU comprenant au moins deux couches selon au moins une des revendications précédentes, caractérisée en ce que la feuille ou au moins une de ses couches a été soumise à un prétraitement par effluves négatives, à un prétraitement au fluor ou à un prétraitement au plasma.

10. Feuille en TPU comprenant au moins deux couches selon au moins une des revendications précédentes, caractérisée en ce que l'épaisseur de la feuille se situe entre 30 µm et 300 µm.

11. Feuille en TPU comprenant au moins deux couches selon au moins une des revendications précédentes, caractérisée en ce que l'épaisseur des couches s'élève respectivement entre 15 µm et 285 µm.

12. Utilisation d'une feuille en TPU comprenant au moins deux couches selon au moins une des revendications précédentes à titre de matière d'emballage pour un matériau photosensible.

13. Utilisation selon la revendication 12 pour des films radiographiques.
